# EUROPEAN PATENT APPLICATION

(11) **EP 2 910 935 A2**
(43) Date of publication of application: **26.08.2015**
(21) Application number: 14184819.2
(22) Date of filing: 15.09.2014
(51) Int. Cl.: G01N 21/88, G01N 3/06

(54) **Non-destructive evaluation of structures using motion magnification technology**

(30) Priority: 28.01.2014 US 201414165676
(71) Applicant: The Boeing Company, Chicago, IL 60606-2016 (US)
(72) Inventor: Tapia, William Joseph, CHIGACO, IL, 60606-2016 (US); Georgeson, Gary E., CHIGACO, IL, 60606-2016 (US)
(74) Representative: Cabinet Plasseraud

(57) **Abstract**

In one process, a mechanical stress (quasi-static or dynamic) or thermal stress is introduced into a local area of a structure where damage is suspected. A standard (or high speed for some dynamic stress approaches) video recording is made of the area under test. The video is processed using a motion amplification algorithm which magnifies extremely small motions. The motion amplification can reveal strains (for static or thermal loading) or wave patterns (for dynamic loading) generated on the surface of the part. If there is damage or structural change, the resulting surface strains will indicate it, or the surface waves in that area will change in phase, amplitude, or both, and will be indicated in the video images. In another process, motion magnification is used to highlight local failure events during structural testing.

## Description

### BACKGROUND

This disclosure generally relates to equipment and methods for non-destructive evaluation and testing of structures.

Non-destructive evaluation of structures involves thoroughly examining a structure without harming the structure or requiring its significant disassembly. Non-destructive evaluation is commonly used in the aircraft industry to inspect aircraft structures for any type of internal or external damage to or flaws in the structure. Non-destructive evaluation is also used in the initial fabrication of the aircraft's structural components. It is used to assure that a part was fabricated correctly and that foreign material is not embedded within the part. Inspection may be performed during manufacturing of a structure and/or after a structure has been put in service

Known NDE techniques include laser shearography and electronic speckle pattern interferometry (ESPI). Laser shearography and ESPI use correlated laser light and interferometry to create a real-time image showing small strain changes on a surface that indicate sub-surface damage or flaws. The strain changes are created using a partial vacuum (in a hood or chamber), heat, or physical loading of the structure. The main drawback of these methods is their high cost. The same cost issue is true of laser Doppler technology, which creates a laser impact event and observes the surface waves using interferometry methods. Low-frequency ultrasound or bond testing is a commonly used inspection method which is less expensive, but is time consuming and is a contact method. Low- frequency ultrasound or bond testing introduces a mechanical wave into the part being examined, which mechanical wave is then received by a sensor that monitors changes in the induced wave as the probe is scanned by hand over an area. The change is displayed either by the movement of a meter needle or by a flying dot on a screen. This change represents the stiffness in the localized area under the sensor. This process is repeated until the inspector has mapped out the damage boundary. There are more sophisticated systems that will provide an image of the area under test, but they are more expensive, require more skill from the operator, and take more time to set up.

Rapid, automated and large-area inspection methods are needed for in-service inspection of sandwich structures. When honeycomb sandwich (both metal and non-metal) structure has been impacted during service, it is susceptible to some degree of damage. Often the mechanic will perform a "tap test" to listen for a difference in the sound of the suspected damage area, yet it takes a certified inspector to determine the extent of the damage, if any, using fairly sophisticated electronic equipment (a bondtester, etc.) to make that determination. This requires time and the availability of a certified operator of the equipment, which in turn drives up the cost of the inspection/repair.

For strain measurement applications such as structural testing, strain gauges require very high man-hours to prepare and apply and the full field strain system is very expensive. Structural testing of composite materials often involves attachment of many strain gauges and some NDE sensors for tracking damage growth. High-speed video is often used right before final failure to collect important data on the modes of failure.

Any advance in technology which could be employed to overcome some or all of the foregoing drawbacks would be desirable.

### SUMMARY

The subject matter disclosed herein is directed in part to methods for enhancing the visualization of small strains or wave patterns in a structure using a video-based motion amplification means. In particular, the video-based methods disclosed herein can be employed for NDE of aircraft structures (such as honeycomb/ sandwich structures) under loading to detect sub-surface damage. In some NDE embodiments disclosed in detail below, common digital video images of structures under applied load are processed using motion magnification techniques to show minute surface strains that indicate sub-surface damage. The use of motion magnification software enables a video-based method of NDE that is rapid, low cost, area-based, and non-contact.

In accordance with some embodiments disclosed hereinafter, a mechanical stress (quasi-static or dynamic) or thermal stress is introduced into the local area where damage is suspected. A standard (or high speed for some dynamic stress approaches) video recording is made of the area under test. The video is processed using a motion amplification algorithm which magnifies extremely small motions. The motion amplification can reveal strains (for static or thermal loading) or wave patterns (for dynamic loading) generated on the surface of the part. If there is damage or structural change, the resulting surface strains will indicate it, or the surface waves in that area will change in phase, amplitude, or both, and will be indicated in the video images. Sub-surface damage can be quickly and easily indicated. These methods can be performed in real-time, creating a strain-sensitive viewer to find and quantify damage to aircraft structure.

Other systems disclosed herein use motion magnification techniques to highlight local failure events during structural testing, thereby providing a low-cost, wide-area method for monitoring structural testing. High-speed video is often used right before final failure to collect important data on the modes of failure. The high-speed video of current and even archived tests would provide imaging of the strains at the point of failure. When applied to structural testing, the additional data provided using motion magnification may reduce the number of tests required and improve structural models. The time-consuming sensor set-ups could be reduced as well.

Motion magnification technology can be used to process video images in real-time at an inspection site or to process archival video image data. In preferred embodiments, the motion magnification software will operate in real-time to enable high-speed video imaging of the structure alongside the magnified strain, for both NDE and testing applications. Reviewing archival high-speed video data could indicate more specific damage growth phenomena that would improve structural models and overall understanding of failure mechanisms.

One aspect of the subject matter disclosed in detail below is a method for non-destructive evaluation of an area on a structure, the method comprising: introducing stress into a local area of a structure where hidden damage may be present; recording a video of the stressed local area; processing the video using motion amplification to magnify small motions in the stressed local area; and observing the processed video. In accordance with various embodiments, the loading is produced by evacuating a volume adjacent to the local area; by transferring heat into or out of the local area; or by mechanically generating structural waves in the local area. The method may further comprise: identifying a flaw or damage in the local area and then capturing a screenshot from the processed video which shows the identified flaw or damage; and marking a location of the identified flaw or damage on the structure. In addition, the method may further comprise concurrently displaying the video and the processed video on respective portions of a screen of a display unit.

Another aspect is a method for highlighting local failure events during structural testing, the method comprising: placing a structure in a materials testing machine; actuating the materials testing machine to apply a load to the structure; recording a video of the loaded structure; processing the video using motion amplification to magnify small motions in the loaded structure; and observing the processed video. This method may further comprise correlating an image from the processed video with other sensor data, a finite element model or structural code.

A further aspect of the subject matter disclosed in detail below is a test set-up for non-destructive evaluation of a structure, comprising: a structure to be evaluated; means for introducing stress into the structure; a computer system; a video camera aimed at the structure or portion thereof and connected to the computer system; and a display unit connected to the computer system, the display unit comprising a screen. The computer system is programmed to perform the following operations: receiving a video of the structure from the camera; processing the video using motion amplification to magnify small motions in the structure; and causing the display unit to display the processed video on at least a first portion of the screen. The computer system may be further programmed to cause the display unit to display the unprocessed video on a second portion of the screen and/or to control the state of the means for introducing stress into the structure.

In accordance with some embodiments, the means for introducing stress into the structure comprise: (a) means for enclosing a volume that surrounds the structure or is adjacent to a portion of the structure; (b) a vacuum pump connected to the enclosed volume by a conduit; and (c) a control valve installed in the conduit between the enclosed volume and the vacuum pump, the control valve having open and closed states, the enclosed volume and the vacuum pump being in fluid communication when the control valve is in the open state and not in fluid communication when the control valve is in the closed state. In accordance with further embodiments, the means for introducing stress into the structure comprise a flash or controllable heat lamp or a mechanical driver or a fatigue or static loading test machine.

Other aspects of systems and methods that utilize motion magnification for non-destructive evaluation or testing of structures are disclosed below.

### BRIEF DESCRIPTION OF THE DRAWINGS

FIGS. 1A and 1B are screen-captured video images of a laminate with a backside machined flaw. For the image seen in FIG. 1A, the laminate was backlit to show an outline of the flaw without using motion magnification. For the image seen in FIG. 1B, the laminate was subjected to stress during video recording and then the video was processed using motion magnification to show an enhanced outline of the flaw.
FIG. 2 is a diagram showing components of a system for in-service NDE of aircraft structure using vacuum loading and motion magnification.
FIG. 3 is a flowchart identifying steps of an in-service NDE process that employs the equipment shown in FIG. 2.
FIG. 4 is a diagram showing components of a system for in-service NDE of aircraft structure using thermal loading and motion magnification.
FIG. 5 is a diagram showing components of a system for in-service NDE of aircraft structure using dynamic/low-frequency mechanical loading and motion magnification.
FIG. 6 is a diagram showing components of a system for monitoring structural testing using motion magnification.
FIG. 7 is a flowchart identifying steps of a process for monitoring structural testing that employs the equipment shown in FIG. 6.
FIG. 8 is a flowchart identifying steps in a known Eulerian video magnification process.

Reference will hereinafter be made to the drawings in which similar elements in different drawings bear the same reference numerals.

### DETAILED DESCRIPTION

Embodiments of systems and methods for using motion magnification technology to perform non-destructive evaluation of structures will now be described. Thereafter systems and methods for using motion magnification technology to monitor structural testing will be described.

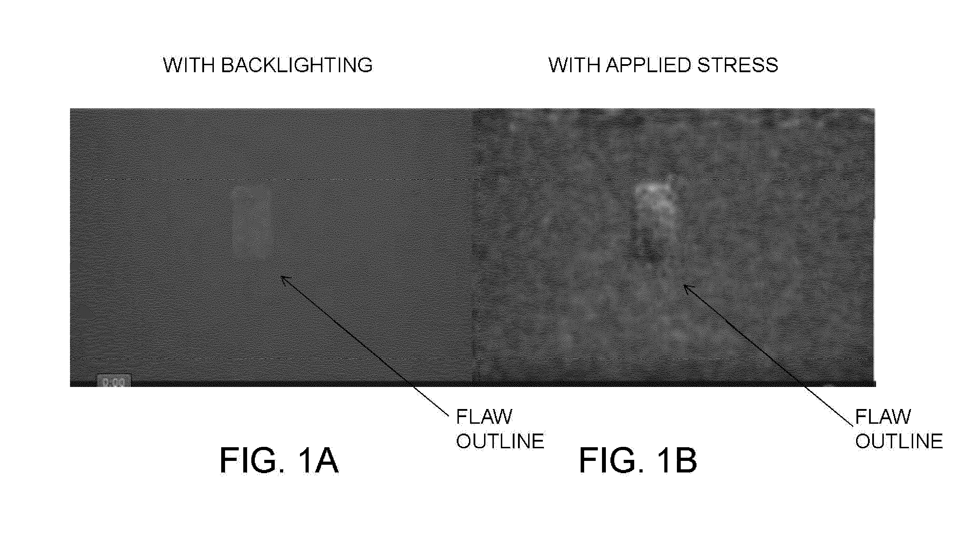

To prove the concept of using motion magnification technology to perform non-destructive evaluation of structures, a test was conducted in which a 3/a inch x 1 inch flaw was machined into a backside of a ⅛-inch-thick composite laminate. In the first part of the test, a light was placed behind the laminate and a video was recorded of an area on the front surface overlapping the machined flaw. FIG. 1A is a screen-captured video image of the backlit laminate showing an outline of the machined flaw, which would normally not be visible from the front. In the second part of the test, a strain was created (i.e., a stress was applied) using a partial vacuum source attached to the backside of the laminate and then another video was recorded. This second video was then processed using motion magnification software made available by Quanta Research Cambridge. FIG. 1 B is a screen-captured video image of the strained laminate showing an outline of the machined flaw with enhanced contrast due to the use of motion magnification. The enhanced contrast enables a more precise measurement of the size and location of a hidden flaw.

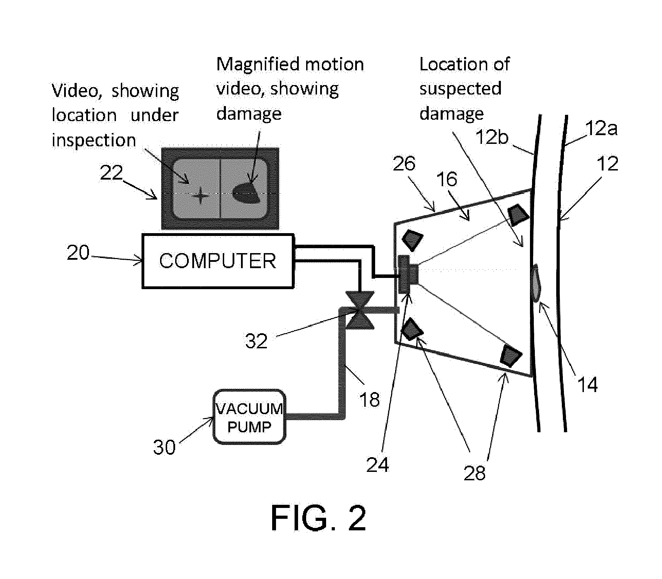

FIG. 2 is a diagram showing components of a system in accordance with one embodiment for in-service NDE of aircraft structure. This embodiment uses vacuum loading to create strains or waves in the structure being evaluated and motion magnification software to amplify motions that appear in a video recording of the loaded structure.

The specific set-up shown in FIG. 2 is designed for NDE of an aircraft structure 12 (e.g., a honeycomb/sandwich structure) having an area in which hidden damage is suspected. The two slightly curved solid lines on the far right-hand side of FIG. 2 represent front skin 12b and rear skin 12a of a sandwich structure that also comprises a honeycomb core (not shown) disposed between and bonded to the front and rear skins. Hidden damage in the form of a skin-core disbond 14 is indicated at the front skin/core interface.

The set-up shown in FIG. 2 comprises a vacuum hood 26 having rubber mating edges hermetically sealed to the external surface of the front skin 12b of the aircraft structure 12 along a perimeter surrounding a local area overlying the hidden skin-core disbond 14; a vacuum pump 30 connected to the vacuum hood 26 by a conduit 18 (e.g., a hose); and a control valve 32 installed in the conduit 18 at a position disposed between an input port of the vacuum hood 26 and an output port of the vacuum pump 30. The vacuum hood 26 and external surface of the front skin 12b define an enclosed volume 16. The enclosed volume 16 and vacuum pump 30 are in fluid communication via the conduit 18 when the control valve 32 is in an open state. The enclosed volume 16 and vacuum pump 30 are not in fluid communication when the control valve 32 is in a closed state. When the enclosed volume 16 is in fluid communication with the vacuum pump 30, the latter can be operated to evacuate the enclosed volume 16 until at least an imperfect vacuum is formed (i.e., the vacuum pressure inside the enclosed volume 16 is much less than atmospheric pressure).

The control valve 32 is under the control of a computer 20 programmed with motion magnification and image analysis software. The computer 20 controls the state of the control valve 32 for cycling or ramping the vacuum pressure inside the enclosed volume 16. The resulting vacuum pressures inside the enclosed volume 16 will exert stresses that introduce strains or waves in the front skin 12b in the local area overlying the hidden skin-core disbond 14.

The set-up shown in FIG. 2 further comprises a plurality of lights 28 arranged to provide the best shadowing for imaging. Although FIG. 2 shows the lights 28 arranged inside the vacuum hood 26, the lights can be arranged outside the vacuum hood if the walls of the latter are optically transparent.

In addition, the set-up shown in FIG. 2 comprises a video camera 24 disposed inside the vacuum hood 26 and directed toward the surface of the local area overlying the hidden skin-core disbond 14. During vacuum loading of the portion of front skin 12b overlying the hidden skin-core disbond 14, the video camera is activated to record images of the affected area. In accordance with the embodiment depicted in FIG. 2, the video image data is output from the video camera 24 to the computer 20 for image processing using the motion magnification software.

The set-up further comprises a display unit 22 connected to the computer 20 and having a display screen. The computer 20 is programmed to perform the following operations: receiving the video image data from the video camera 24; processing the video image data using motion amplification to magnify motion in the structure; and causing the display unit 22 to display the unprocessed (i.e., raw) video (showing the area under inspection) on one side of the screen and the processed video (showing the hidden damage) on the other side of the screen in a side-by-side relationship.

In accordance with alternative embodiments, instead of attaching a vacuum hood 26 to a portion of the aircraft structure 12, the entire aircraft structure 12 can be placed inside of a vacuum chamber. If the vacuum pressure inside that vacuum chamber were then changed to produce vacuum loading, the video captured by the video camera 24 could be processed using motion magnification to display the entire aircraft structure 12, including all flaw areas at once.

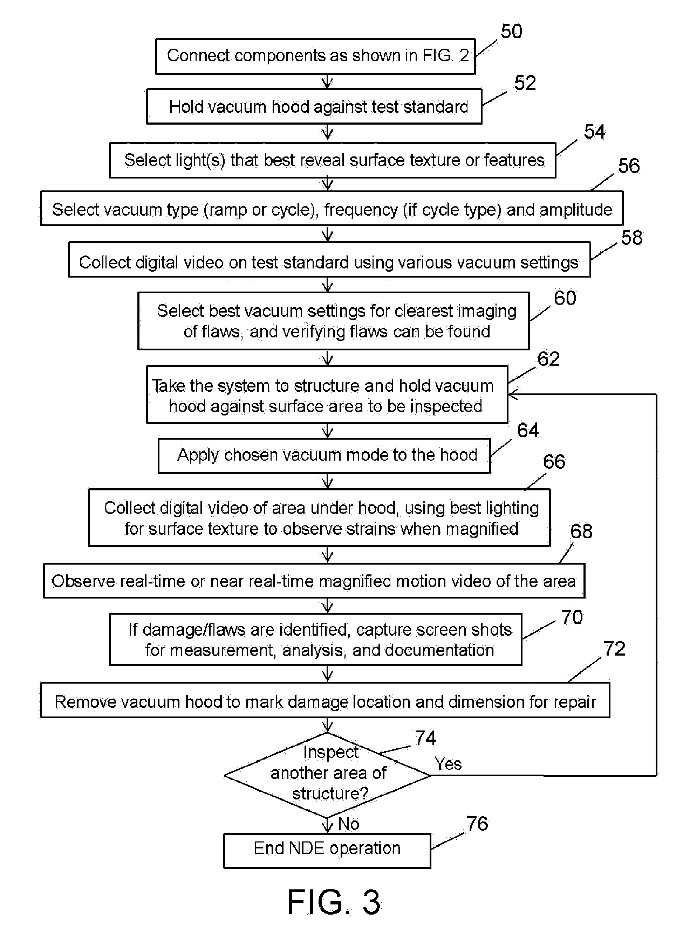

FIG. 3 is a flowchart identifying steps of an in-service NDE process that employs the equipment shown in FIG. 2. In accordance with one embodiment, a process for an in-service NDE application using vacuum loading may comprise the following steps: (a) connect the vacuum hood, vacuum pump, lights, control valve, video camera and computer as shown in FIG. 2 (step 50); (b) hold the vacuum hood against a test standard (step 52); (c) select a light or an arrangement of lights that best reveals surface texture or features (step 54) (if none are observed, a washable speck pattern can be sprayed or powdered on and rinsed off later); (d) select a vacuum type (ramp or cycle), frequency (if cycle type) and amplitude (step 56); (e) collect digital video on a test standard using various vacuum settings (step 58), returning to step 56 as needed; (f) select the best vacuum settings for clearest imaging of flaws and verify flaws can be found (step 60); (g) take the system to the structure and hold the vacuum hood against the surface to be inspected (step 62); (h) control the control valve to apply the chosen vacuum mode to the vacuum hood (step 64); (i) collect digital video of the area under vacuum hood, using the best lighting for the given surface texture to observe strains when magnified (step 66); (j) observe real-time or near-real-time magnified motion video of the area (step 68); (k) if damage or flaws are identified, capture screen shots for measurement, analysis, and documentation (step 70); (I) remove the vacuum hood in order to mark the damage location and dimension for repair (step 72); (m) determine whether another area of the structure needs to be inspected or not (step 74); (n) if a determination is made in step 74 that another area needs to be inspected, the process returns to step 62 and the portion of the process from step 62 to step 74 is repeated; (o) if a determination is made in step 74 that no additional areas of the structure need to be inspected, the NDE operation is terminated (step 76).

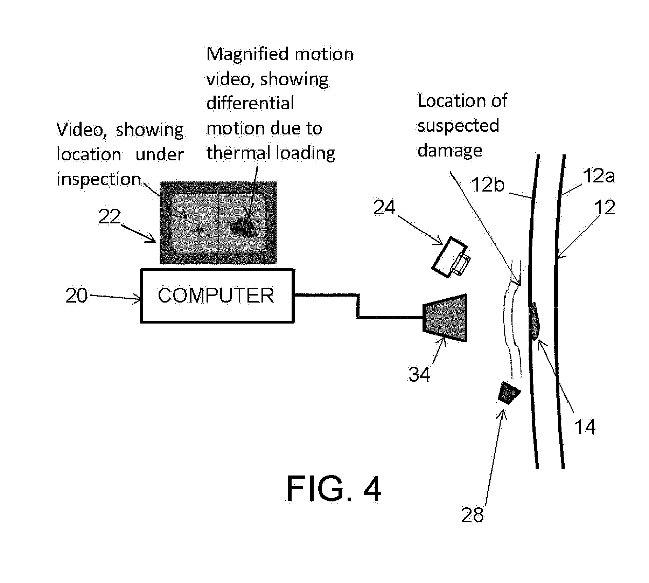

FIG. 4 is a diagram showing components of a system in accordance with another embodiment for in-service NDE of aircraft structure. This embodiment uses thermal loading to produce dynamic thermal expansion (heating) and contraction (cooling) at the surface. The resulting wave patterns can be observed using motion magnification software to amplify motions that appear in a video recording of the thermally loaded structure. Disruptions in the heat transfer into the structure due to sub-surface damage alter the motion of the material above that damage relative to the surrounding area. Again the specific set-up shown in FIG. 4 is designed for NDE of an aircraft structure 12 (e.g., a honeycomb/sandwich structure) having an area in which hidden damage, such as a skin-core disbond 14, is suspected.

The set-up shown in FIG. 4 comprises a flash or controllable heat lamp 34 which is placed in front of and in proximity a local area in which hidden damage is suspected. The flash or heat lamp 34 is under the control of a computer 20 programmed with motion magnification and image analysis software. The computer 20 controls the state of the flash or heat lamp 34 for heating or cooling the local area of the top skin 12b. The resulting thermal expansion and contraction produce waves in the front skin 12b in the local area overlying the hidden skin-core disbond 14.

The set-up shown in FIG. 4 further comprises one or more lights 28 arranged to provide the best shadowing for imaging and a video or infra-red camera 24 directed toward the surface of the local area overlying the hidden skin-core disbond 14. During thermal loading of the portion of front skin 12b overlying the hidden skin-core disbond 14, the camera 24 is activated to record images of the affected area. In accordance with the embodiment depicted in FIG. 4, the video image data is output from the camera 24 to the computer 20 for image processing using the motion magnification software.

The set-up further comprises a display unit 22 connected to the computer 20. Again the computer 20 is programmed to receive the video image data from the camera 24; process the video image data using motion amplification; and cause (i.e., control or command) the display unit 22 to display the unprocessed video (showing the location under inspection) on one side of the screen and the processed video (showing differential motion due to thermal loading) on the other side in a side-by-side relationship.

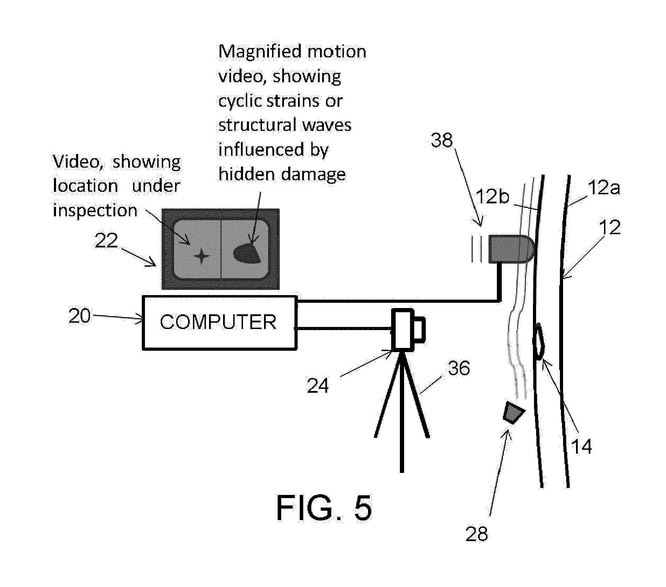

FIG. 5 is a diagram showing components of an alternative embodiment of a system for in-service NDE of aircraft structure. This system uses dynamic/low-frequency mechanical loading and motion magnification. Structural waves generated mechanically will produce surface motion that can be magnified and imaged. The surface motion will be patterned and influenced by sub-surface flaws or damage. The frequency can be optimized for optimal defect detection.

The set-up shown in FIG. 5 comprises a broad spectrum or ramped frequency mechanical driver 38 (e.g., a tapper, a mechanical impedance probe, an ultrasonic transducer, etc.) which is placed in front of and in proximity a local area in which hidden damage is suspected. The mechanical driver 38 is under the control of a computer 20 programmed with motion magnification and image analysis software. The computer 20 controls the operation of the mechanical driver 38 for generating structural waves in the top skin 12b having a specified frequency. The resulting surface motion in the local area overlying the hidden skin-core disbond 14 is recorded by a high=speed video camera 24 mounted on a tripod 36. In accordance with the embodiment depicted in FIG. 5, the video image data is output from the camera 24 to the computer 20 for image processing using the motion magnification software. Again the computer 20 is programmed to receive the video image data from the camera 24; process the video image data using motion amplification; and cause (i.e., control or command) the display unit 22 to display the unprocessed video (showing the location under inspection) on one side of the screen and the processed video (showing cyclic strains or structural waves influenced by hidden damage) on the other side in a side-by-side relationship.

Motion magnification technology can be used by commercial airlines for NDE or pre-NDE of sandwich structures on aircraft. In a pre-NDE method, the motion-magnified video recorded at an airport can be shown in real-time to a remote expert for rapid damage assessment. Motion magnification could be applied as an additional feature to any image-based NDE hardware for improved damage detection. Suppliers of sandwich structure could use it to check their product.

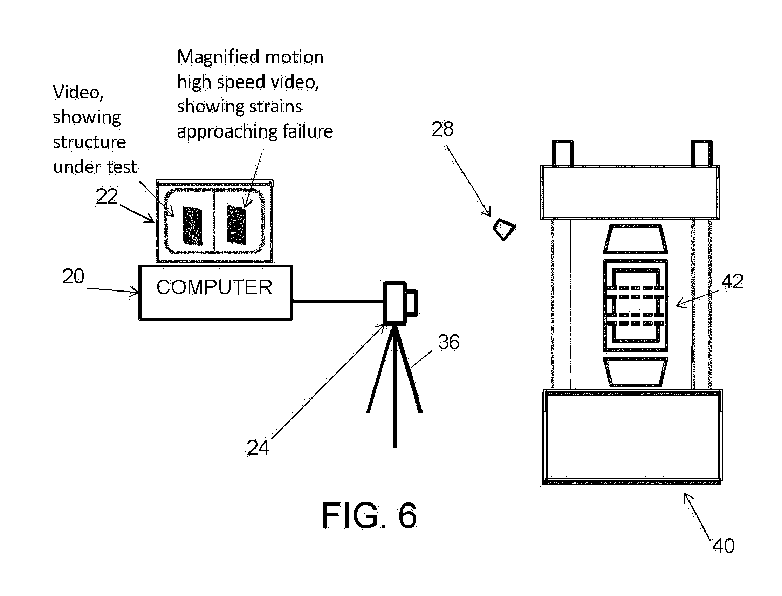

In an alternative application, motion magnification technology can be used for highlighting local failure events during structural testing. FIG. 6 is a diagram showing components of a system for monitoring structural testing using motion magnification in accordance with a further embodiment. An aircraft structure 42 is placed in a test machine 40 for performing a fatigue or static loading test. The test machine 40 may comprise a load frame to hold the prototype specimen, a hydraulic pump or electro-mechanical power source, piston actuators to create a force or motion, and a computer controller with specialized software to coordinate the actuator movement and record and manipulate results. The monitoring set-up comprises a high-speed video camera 24 mounted on a tripod 36, one or more lights 28, a computer 20 programmed with motion magnification and image analysis software, and a display unit 22. In this embodiment, the computer 20 is programmed to receive the high-speed video image data from the camera 24; process the video image data using motion amplification; and cause (i.e., control or command) the display unit 22 to display the unprocessed video (showing the structure under test) on one side of the display screen and the processed high-speed video (showing strains approaching failure) on the other side in a side-by-side relationship. The computer 20 is further programmed to correlate the results to structural models and other sensor data (e.g., data from strain gauges attached to the aircraft structure 42).

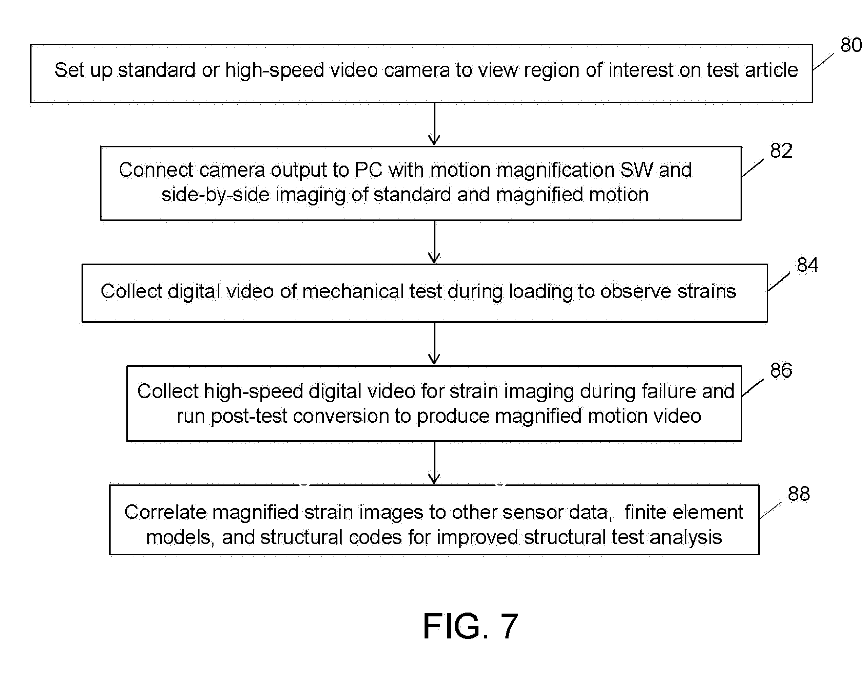

FIG. 7 is a flowchart identifying steps of a process for monitoring structural testing that employs the equipment shown in FIG. 6. In accordance with one embodiment, a process for monitoring structural testing may comprise the following steps: (a) set up a standard or a high-speed video camera to view the region of interest on the test article (step 80); (b) connect the camera output port to an input port of a computer programmed with motion magnification software and software for causing a display unit to present side-by side imaging of standard and magnified motion on its screen (step 82); (c) collect digital video of the mechanical test during loading to observe strains (step 84); (d) collect high-speed digital video for strain imaging during failure and run a post-test conversion to produce magnified motion video (step 86); and (e) correlate (standard or high speed) magnified strain images to other sensor data (e.g., in-situ ultrasonic data, strain gauge data, etc.), finite element models, and structural codes for improved structural test analysis (step 88). In accordance with alternative embodiments, only one of either step 84 or step 86 is performed.

In accordance with a further embodiment, video recordings of unplanned events (such as failure of aircraft, buildings, bridges, etc.) can be reviewed to provide improved failure analysis and pinpointing of failure initiation and progress. Initial and small motions and strains can be captured and analyzed for improved assessments.

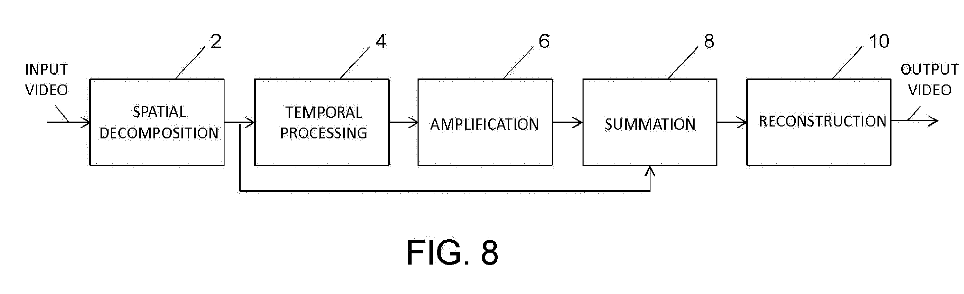

FIG. 8 is a flowchart identifying steps in a suitable video magnification process disclosed in detail in an article authored by Wu et al. and entitled "Eulerian Video Magnification for Revealing Subtle Changes in the World", published in J. ACM Trans. On Graphics (TOG)-SIGGRAPH 2012 Conf. Proc., Vol. 31, Issue 4, July 2012, Article No. 65. The input video is decomposed into different spatial frequency bands (operation 2). Then temporal processing is performed on each spatial band to extract the frequency bands of interest (operation 4). The extracted bandpassed signals are then multiplied by respective magnification factors (operation 6). Next the amplified signals are added to the original signal (operation 8) and the spatial pyramid is collapsed (operation 10) to obtain the output video in which motion is magnified.

While methods for enhancing the visualization of small strains or wave patterns in a structure using a video-based motion amplification means have been described with reference to various embodiments, it will be understood by those skilled in the art that various changes may be made and equivalents may be substituted for elements thereof without departing from the teachings herein. In addition, many modifications may be made to adapt the concepts and reductions to practice disclosed herein to a particular situation. Accordingly, it is intended that the subject matter covered by the claims not be limited to the disclosed embodiments.

As used in the claims, the term "computer system" should be construed broadly to encompass a system having at least one computer or processor, and which may have multiple computers or processors that communicate through a network or bus. As used in the preceding sentence, the terms "computer" and "processor" both refer to devices having a processing unit (e.g., a central processing unit) and some form of memory (i.e., computer-readable medium) for storing a program which is readable by the processing unit.

In construing the claim limitation "means for enclosing a volume that surrounds said structure or is adjacent to a portion of said structure", the structures for performing the recited function include the vacuum hood and vacuum chamber disclosed herein and equivalents thereof.

The method claims set forth hereinafter should not be construed to require that the steps recited therein be performed in alphabetical order (any alphabetical ordering in the claims is used solely for the purpose of referencing previously recited steps) or in the order in which they are recited. Nor should they be construed to exclude any portions of two or more steps being performed concurrently or alternatingly.

Note: The following paragraphs describe further aspects of the disclosure:
A1. A method for highlighting local failure events during structural testing, the method comprising:
   placing a structure in a materials testing machine;
   actuating the materials testing machine to apply a load to the structure;
   recording a video of the loaded structure;
   processing the video using motion amplification to magnify small motions in the loaded structure; and
   observing the processed video.
A2. The method as recited in paragraph A1, further comprising correlating an image from said processed video with other sensor data, a finite element model or structural code.
A3. The method as recited in paragraph A1, further comprising concurrently displaying the video and the processed video on respective portions of a screen of a display unit.

## Claims

1. A method for non-destructive evaluation of an area on a structure, the method comprising:
introducing stress into a local area of a structure where hidden damage may be present;
recording a video of the stressed local area;
processing the video using motion amplification to magnify small motions in the stressed local area; and
observing the processed video.

2. The method as recited in claim 1, wherein stress is introduced by loading the local area.

3. The method as recited in claim 2, wherein the loading is varied in accordance with a ramp function.

4. The method as recited in claim 2, wherein the loading is varied cyclically.

5. The method as recited in claim 2, wherein the loading is produced by evacuating a volume adjacent to the local area.

6. The method as recited in claim 2, wherein the loading is produced by applying a varying vacuum pressure to a surface of the local area.

7. The method as recited in claim 2, wherein the loading is produced by transferring heat into or out of the local area.

8. The method as recited in claim 2, wherein the loading is produced by mechanically generating structural waves in the local area.

9. The method as recited in claim 1, further comprising identifying a flaw or damage in the local area and then capturing a screenshot from the processed video which shows the identified flaw or damage.

10. The method as recited in claim 9, further comprising marking a location of the identified flaw or damage on the structure.

11. The method as recited in claim 1, further comprising concurrently displaying the video and the processed video on respective portions of a screen of a display unit.

12. A test set-up for non-destructive evaluation of a structure, comprising:
a structure to be evaluated;
means for introducing stress into the structure;
a computer system;
a video camera aimed at the structure or portion thereof and connected to said computer system; and
a display unit connected to said computer system, said display unit comprising a screen,
wherein said computer system is programmed to perform the following operations:
receiving a video of the structure from said camera;
processing the video using motion amplification to magnify small motions in the structure; and
causing said display unit to display the processed video on at least a first portion of said screen.

13. The test set-up as recited in claim 12, wherein said computer system is further programmed to cause said display unit to display the unprocessed video on a second portion of said screen.

14. The test set-up as recited in claim 12, wherein said computer system is further programmed to control the state of said means for introducing stress into the structure.

15. The test set-up as recited in claim 12, wherein said means for introducing stress into the structure comprise:
means for enclosing a volume that surrounds said structure or is adjacent to a portion of said structure;
a vacuum pump connected to said enclosed volume by a conduit; and
a control valve installed in said conduit between said enclosed volume and said vacuum pump, said control valve having open and closed states, said enclosed volume and said vacuum pump being in fluid communication when said control valve is in said open state and not in fluid communication when said control valve is in said closed state.
